Europäisches Patentamt

European Patent Office

Office européen des brevets

(11) Publication number: **0 152 845**
A1

(19)

(12) **EUROPEAN PATENT APPLICATION**

(21) Application number: 85101084.3

(22) Date of filing: **01.02.85**

(51) Int. Cl.⁴: **C 10 G 11/14, B 01 J 23/90,
B 01 J 29/38**

(30) Priority: **08.02.84 US 578234**

(71) Applicant: **AIR PRODUCTS AND CHEMICALS, INC., P.O. Box 538, Allentown, Pennsylvania 18105 (US)**

(72) Inventor: **Hegarty, William Patrick, 316 Benner Road, Apt. 202, Allentown, PA 18104 (US)**
Inventor: **Liebelson, Michael Solomon, New Tripoli, PA (US)**
Inventor: **Bronfenbrenner, James Cole, 1835 Lehigh Parkway North, Allentown, PA 18103 (US)**
Inventor: **Taschler, David Robert, Lyon Valley Farm Road, Schnecksville, PA 18078 (US)**
Inventor: **Rao, Pradip, 4325 Crest Lane, Allentown, PA 18104 (US)**

(43) Date of publication of application: **28.08.85**
**Bulletin 85/35**

(84) Designated Contracting States: **BE DE FR GB NL**

(74) Representative: **Kador . Klunker . Schmitt-Nilson . Hirsch, Corneliusstrasse 15, D-8000 München 5 (DE)**

(54) Method for controlling fluidized catalytic cracker regenerator temperature and velocity with carbon dioxide.

(57) A process is set forth for the operation and control of a fluidized catalytic cracking unit wherein the regenerator is fed witz independently controlled oxygen rich gas and carbon dioxide rich gas to maintain desired temperatures, velocities, and catalyst to oil (C/O) ratio within the constraints of the system.

EP 0 152 845 A1

0152845

211-P-US02886

## METHOD FOR CONTROLLING FLUIDIZED CATALYTIC
## CRACKER REGENERATOR TEMPERATURE AND VELOCITY
## WITH CARBON DIOXIDE

### TECHNICAL FIELD

The present invention is directed to the field of fluidized catalytic cracking of hydrocarbon feedstocks and the attendant regeneration of the cracking catalyst in a fluidized regenerator. The invention is particularly related to the control of regenerator temperatures and regenerator fluidizing gas velocities by the independent control of the quantity of combustion and diluent gas admitted to the regenerator. More particularly, the invention is related to the utilization of a gas mixture of an oxygen-containing gas and a carbon dioxide-containing gas as the combustion and diluent gases in such regenerators.

### BACKGROUND OF THE PRIOR ART

The refining industry is developing a surplus of petroleum residuum due to substitution of coal and gas for resid fuel in power generation, and the increasing fraction of residuum in projected petroleum supplies. More refining capacity to convert the over supply of resid to useable products will be required. One process that can be used for resid conversion is the fluid catalytic cracking process (FCC).

In the FCC process, heavy oil and catalyst are contacted in the reactor producing distillate products and depositing coke on the catalyst. The coked catalyst is separated from the reaction products, and flows to the regenerator where the coke is combusted with oxygen to regenerate the catalyst. The regenerated catalyst flows back to the reactor in a continuous manner. The FCC reactor and regenerator operate in heat balance with the reactor temperature set to achieve the desired product slate. The heat required for vaporization and endothermic cracking of the feed to achieve this temperature is provided by manipulating the rate of hot regenerated catalyst circulated from the regenerator to the reactor. The cooled, coked catalyst is circulated back to the regenerator from the reactor where air is added to provide oxygen for combusting the coke to $CO$, $CO_2$ and $H_2O$ resulting in an acceptable level of coke on regenerated catalyst (CRC).

The combustion of coke provides the necessary heat for vaporization and endothermic cracking of the feed and sensible heat loss to the flue gas and atmosphere. The regeneration temperature and catalyst circulation rate are in equilibrium when heat generation balances heat requirements. Therefore, the catalyst to oil ratio (C/O), which has a strong effect on conversion to desired products and coke yield, is a dependent variable and cannot be controlled independently to any significant degree. With high activity zeolite catalysts a typical gas oil FCC unit yields 4-6 wt% coke at optimal reactor temperature and complete catalyst regeneration (low CRC) with C/O ratios from 5-8 lb. catalyst per lb. of feed. Over this range of C/O ratio, conversion can vary as much as 10 percentage points.

Residuum differs from gas oil in several ways that significantly affect FCC operation. The primary effect is the coke forming tendency of residuum as measured by Conradson carbon residue. This number is typically 1-3 for gas oil and 10-20 for residuum. This increased coking tendency increases the heat generation from coke combustion, but doesn't significantly change the heat requirement of the unit; it also requires more oxygen to regenerate the catalyst to the desired CRC level. This oxygen is typically supplied by compressing air, and the maximum air rate is limited by the gas velocity at which excessive catalyst carry over and unstable fluidization in the regenerator occur. At this point, coke yield must be reduced by reducing feed coking tendency or feed rate.

A second limit on coke combustion capacity is maximum temperature as limited by metallurgy of the regenerator vessel, cyclones, and flue gas system and loss of catalyst activity due to sintering above 1400°F in the presence of steam from combustion. Since the ratio of heat generated to heat required increases with coke yield, the regenerator temperature will increase and the catalyst circulation rate will decrease until equilibrium is reached at the desired reactor temperature. When the maximum regenerator temperature is reached, coke burning requirements must again be decreased.

Residuum also contains more metals (Ni+V) than gas oil, and metal concentration on catalyst has a significant impact on coke yield. However, metals concentration can be controlled by increasing catalyst makeup rate; and technology is available to passivate Ni, significantly reducing its tendency to increase coke yield.

Numerous methods have been employed to accurately control the regeneration of catalyst which is continuously being recycled to and from a fluidized catalytic cracking reactor wherein hydrocarbon feedstocks are initially processed into more utilizable products. The adjustment of air flow, the utilization of heat exchange equipment, the inclusion of initiators or catalysts for the regeneration and the adjustment of catalyst beds both in the cracking reactor and the regenerator have all been suggested as means or methods for the adequate control of the cracking and regeneration reactions.

In theory increased coke burning capacity and decreased oxygen requirements can be achieved by only partially combusting carbon to CO instead of $CO_2$. In the catalyst dense bed of the FCC regenerator, carbon is combusted to CO and $CO_2$ and the heat of combustion is imparted to the catalyst. The rate of carbon combustion increases rapidly with excess oxygen and temperature. However, in the dilute phase above the catalyst dense bed, the homogeneous combustion of CO to $CO_2$ also increases rapidly with excess $O_2$ and temperature. This reaction releases nearly three times as much heat as the combustion of carbon to CO, but there is little catalyst to absorb it resulting in very high gas temperatures. This phenomenon is called "afterburning" and can cause severe thermal damage to the regenerator cyclones and flue gas system.

Practice has shown that significant CO generation is not achieved at the temperature and excess oxygen levels required to achieve complete catalyst regeneration. It is now common practice to achieve complete regeneration of catalyst by adding CO combustion promoters to the FCC catalyst inventory. These promoters combust CO to $CO_2$ in the dense catalyst bed where the heat of reaction is imparted to the catalyst. No CO is left to "afterburn", and therefore the excess oxygen and regenerator temperature can be increased to the maximum limits resulting in complete catalyst regeneration. At low CRC, conversion is increased and coke yield is significantly reduced, moderating the regenerator temperature increase due to complete combustion to $CO_2$. But at constant reaction temperature, C/O ratio is also reduced thereby offsetting some of the benefits of complete catalyst regeneration. Regenerators operating in the complete combustion mode with air are often at coke burning limits due to high gas velocities.

Oxygen enrichment can be employed in this situation to increase $O_2$ content of the combustion air. Since this effectively reduces the $N_2$ content, oxygen availability is increased without increasing gas velocity. However, the regenerator temperature will rise to a new equilibrium level at a lower catalyst/oil ratio since the ratio of combustion heat generated to flue gas sensible heat has increased. Oxygen enrichment therefore, is constrained by the maximum metallurgical and catalyst temperature in the regenerator and can lead to reduced conversion.

With $O_2$ enrichment, maximum regenerator temperature is the factor limiting residuum feed to the FCC. Steam coils and catalyst coolers have been employed to remove heat from the regenerator and offset incremental heat generated by the residuum's increased coke yield. Steam coils are considered a fixed heat removal system since they cannot be turned on and off without risk of thermal damage. Therefore, they are seldom employed alone since they would reduce flexibility to run low coke yielding feeds. Furthermore, steam coils reduce the maximum gas rate at design velocity limits, and thus reduce oxygen availability when regenerating with air.

Catalysts coolers are a variable heat removal system and are most often used in conjunction with steam coils. Catalyst coolers are very effective at removing heat, but experience has shown that controlling catalyst circulation rate, and therefore heat removal, is difficult. Operating failures associated with the circulation of high velocity solids through tubes are common, resulting in poor reliability.

With steam coils and catalyst coolers, regenerator temperature can be controlled and therefore C/O ratio can be held at the desired level without loss of conversion.

Other gas mixtures have been contemplated for the fluidization and combustion gas fed to the regenerator of a fluidized catalytic cracking reactor. Various combinations of oxygen and inert diluent gases, such as carbon dioxide, have been suggested by the prior art. However, these combinations have not been taught to be useful for the control of temperature and combustion in the regeneration of catalyst from the cracking of heavy hydrocarbons and residuums.

U.S. Patent 4,388,218 discloses a method for regenerating catalyst in the fluid catalytic cracking process in two, successive stages. The patent suggests that different combinations of $O_2$, $H_2O$, and $CO_2$ can be used in each zone to make the net heat of reaction of various carbon gasification and combustion reactions equal to the heat required to heat balance the FCC unit. This method of control implies that the rate of reaction is known and the $O_2$, $CO_2$ and $H_2O$ ratio can be adjusted in a dynamic fashion to achieve a steady state heat balance.

European Patent Application 0072653 discloses nearly the same process as mentioned in Patent 4,388,218. However, it is recognized that the gasification of carbon with steam destroys catalyst activity at typical FCC regenerator conditions. Further the rate of gasification of carbon with $CO_2$ is very slow at typical conditions and requires the addition of a catalyst as disclosed in the patent application. Control of the heat balance is not addressed.

U.S. Patent 4,304,659 discloses a method for controlling regenerator temperatures in a fluidized catalytic cracking process by the adjustment of catalyst bed height both in the cracking reactor and in the regenerator. The patent also suggests controlling the rate of oxygen introduction into the regenerator in order to provide substantially complete combustion of the coke on the catalyst as well as minimizing the carbon monoxide content of the flue gas. The regeneration gas can be air or an oxygen containing gas with inerts, such as carbon dioxide.

The prior art has suggested various means and methods for controlling the regeneration of fluidized cracking catalyst, using mixtures of $O_2/CO_2$ in multi-stage regenerators or additional heat removal systems, but none of the prior art has suggested a solution to both problems of temperature and fluidizing gas velocity limitations in a single-stage regenerator without additional heat removal systems using $O_2/CO_2$ with FCC feed containing heavy hydrocarbons and residuums having high coke yield.

This invention controls the regenerator temperature and alters gas velocity by the rate of addition of a carbon dioxide-containing gas, resulting in the extra degree of freedom to optimize catalyst to oil (C/O) ratio, at the desired reactor temperature. The invention also achieves the control of the coke on regenerated catalyst (CRC) level by its independently controlled flow of oxygen-containing gas. The invention allows the operation of a regenerator to enjoy an increased $CO/CO_2$ ratio in the combustion flue gas at low CRC to further extend the residuum feed capacity of FCC units within their existing velocity and temperature constraints by controlling the dilute phase temperature with a $CO_2$ quench flow.

## BRIEF SUMMARY OF THE INVENTION

The present invention comprises a method for operating a fluidized catalytic cracking reactor and the catalyst regenerator associated with said reactor to control temperatures and fluidizing gas velocities in the regenerator in relationship to varying coke yields of the hydrocarbon feed to the fluidized catalytic cracking reactor. The method is directed to the operation of the regenerator with a fluidizing gas mixture of a carbon dioxide-containing gas and an oxygen-containing gas which is introduced into the regenerator from an independently controlled source of carbon dioxide and an independently controlled source of oxygen, particularly a commercially pure oxygen.

The oxygen-containing gas input is controlled to achieve a CRC of less than 0.5 wt%, and preferably less than 0.25 wt%, such that oxygen in the flue gas does not exceed 3 vol.%. The oxygen concentration of the fluidizing gas mixture should be kept in the range of 10-40% by volume.

The amount of carbon dioxide flow to the regenerator is controlled such that combustion of coke from the catalyst results in regenerated catalyst and flue gas temperatures that are within the regenerator velocity and temperature constraints, and result in heat balancing the FCC unit at the catalyst to oil ratio that achieves the desired conversion without major net evolution of heat. Varying the carbon dioxide rate within the constraints of the process (temperature, velocity, and oxygen concentration in fluidization/combustion gas) enables the FCC unit to process feeds with a much broader range of inherent coking tendency while maintaining the desired level of conversion, than is possible with FCC operation as typically practiced.

Changes in $CO_2$ fluidization flow rate required to offset changes in inherent feed coking tendency while maintaining desired process conditions are defined by the relationship:

$$Y = K_1(C-C_0)+Y_0$$

where:

Y : New $CO_2$ flow, lb $CO_2$/Bbl feed

$Y_0$ : Current $CO_2$ flow, lb $CO_2$/Bbl feed

C : New feed coke yield, lb coke/Bbl feed

$C_0$ : Current feed coke yield, lb coke/Bbl feed

$K_1$ : Constant, lb $CO_2$/lb Coke

The constant, $K_1$, is generally in the range of 40-50 at complete combustion and 30-50 at partial combustion. Generally, the carbon dioxide content of the fluidizing gas mixture is in the range of 60% by volume or greater.

The regenerator is preferably operated with 21-30% by volume oxygen in the fluidizing gas mixture. The temperature range of the regenerator is 1250-1600°F, preferably 1250-1400°F.

The present invention can also comprise the addition of quench gas, preferably from the same source as the $CO_2$ rich fluidization gas at 100-200°F, to the regenerator dilute phase flue gas. The quench rate is controlled to maintain the flue gas temperature entering the regenerator cyclones at 1000-1400°F and preferably 1050-1150°F without exceeding the flue gas velocity constraints.

## BRIEF DESCRIPTION OF THE DRAWINGS

FIG 1 is a double graph of the effect of regeneration gas on FCC regenerator flue gas composition and catalyst regeneration.

FIG 2 is a graph of the effect of regeneration gas on fresh FCC feed conversion versus the carbon content of the catalyst.

FIG 3 is a graph of FCC yields with regeneration by air and $O_2/CO_2$.

FIG 4 is a graph of FCC heat balanced $CO_2$ recycle rate at constant conversion.

FIG 5 is a flowscheme of the process of the present invention.

## DETAILED DESCRIPTION OF THE INVENTION

In accordance with the present invention, a fluidized catalytic cracking unit is run in a continuous manner wherein catalyst which experiences coking during its presence in the cracking reactor is continually removed to a regenerator for the combustion and removal of coke on the catalyst. This regeneration reactivates the catalyst and increases the temperature of the reactivated catalyst which then provides the heat required for vaporization and endothermic cracking of the hydrocarbon feed in the cracking reactor. The coked catalyst in the regenerator is regenerated with an oxygen-containing gas mixture which comprises, preferably, commercially pure oxygen blended with carbon dioxide.

Presently, there are two constraints on regenerators which have typically prevented an increased charge rate of hydrocarbon feedstock to the fluidized catalytic cracking reactor or the use of feedstocks with high coking tendencies. The constraints are excessive regenerator temperature and excessive regenerator gas velocities.

High temperatures are the result of the high heat release involved in combusting large quantities of coke from the catalyst to be regenerated and the afterburning of carbon monoxide to carbon dioxide in the regenerator overhead. The large or increased quantity of coke is the result of the cracking of heavier hydrocarbon feedstocks which have higher residue carbon levels (Conradson carbon), such as is found in residuums. The heat release from combusting this additional charge of carbon on the coked catalyst is greater than the heat requirement necessary for heat balance in the fluidized catalytic cracking reactor, thereby reducing the catalyst to oil (C/O) ratio and thus reducing hydrocarbon conversion. Therefore the dissipation of this heat would be beneficial.

The other constraint involves high regenerator gas velocities which arise from high combustion gas rates and the requirement to inject additional quantities of oxygen containing combustion gas into the regenerator in order to burn the increased increment of coke which is formed on the catalyst during the cracking of the heavy hydrocarbon feedstocks having the high residue carbon contents. Fluidized catalytic cracker regenerators are operated near the limitations of their temperature and velocity capabilities because of the practice of operating in the hot mode wherein carbon monoxide is completely combusted in the regenerator to carbon dioxide to achieve complete catalyst regeneration (low CRC). This evolves additional heat and requires additional quantities of oxygen, which contributes to higher temperatures, increased gas velocities, reduced C/O ratio and therefore reduced conversion.

Operation of the FCC regenerator with independently controlled $O_2$-rich and inert (preferably $CO_2$ rich) gas streams is illustrated in the following four examples. The inert gas could be any inert gas having a molar heat capacity greater than nitrogen, which is the inert gas in standard air regeneration. Carbon dioxide is the preferred inert gas since it has a significantly higher molar heat capacity than $N_2$ and, as a primary combustion product, can be most economically supplied from the recycle of the regenerator flue gas or at least partially supplied by the recycle of regenerator flue gas and a high purity source of carbon dioxide, or completely supplied from a high purity source of carbon dioxide.

The preferred composition of the regenerating gas which fluidizes the regenerator bed and combusts the carbon on the regenerating catalyst would comprise a mixture of oxygen and carbon dioxide wherein the oxygen concentration would range up to 40%, preferably 21-30% by volume. The upper limitation on the oxygen concentration is set by the metallurgical requirements in the presence of $O_2$ at high temperatures of the regenerator and fluidization gas distributor as well as catalyst surface temperatures and the lower limit is set by coke combustion rate. The control capabilities which are achieved by the use of a combination of oxygen and carbon dioxide as the fluidizing gas mixture allow for the processing of additional quantities of hydrocarbon in the fluidized catalytic cracking reactor, or alternately, allow for the processing of hydrocarbon feedstocks having higher Conradson carbon levels while maintaining optimal reaction conditions. The basis for the following examples and the comparison of $N_2$ and $CO_2$ is shown in Tables 1 and 2.

## TABLE 1*

### FCC Base Conditions

| | |
|---|---|
| Total FCC Feed, BPD | 55,000 |
| API | 21 |
| Catalyst Circ. Rate, M lb/min | 87.0 |
| Catalyst/Oil Ratio, lb/lb | 7.0 |

| Temperatures, °F | |
|---|---|
| Reactor | 961 |
| Regenerator-Dense | 1311 |
| Regenerator-Dilute | 1321 |
| Combustion Gas | 100 |
| Feed Preheat | 532 |

*Basis for Examples and Figure 4

## TABLE 2

### Comparison of $N_2$ and $CO_2$ Heat Capacities

| | $N_2$ | $CO_2$ |
|---|---|---|
| Temperature | -------1310°F------- | |
| Molar Heat Capacity, Btu/lb-Mole-°F | 7.5 | 12.8 |
| Mass Heat Capacity, Btu/lb-°F | 0.27 | 0.29 |

## Example 1

### Substituting $O_2/CO_2$ For Air at Constant Coke Yield

The result of substituting $O_2/CO_2$ (Case B) for air (Case A) in an FCC unit operating in heat balance at the base conditions shown in Table 1 is illustrated in Example 1 and Table 3. Due to the increased molar heat capacity of $CO_2$ relative to $N_2$ (see Table 2), the same reactor and regenerator temperatures and catalyst to oil ratio can be maintained at significantly lower regenerator gas velocities. The concentration of $O_2$ in the combustion gas is increased from 21 to the preferred maximum of 30 volume percent as the standard cubic feet per barrel of combustion gas are reduced from 2950 to 2115. Note that the mass flow rate of $O_2$ plus $CO_2$ does not change significantly since the mass heat capacities of $N_2$ and $CO_2$ are nearly equivalent at the regenerator temperature of 1311°F. The actual cubic feet of flue gas per barrel of feed is reduced from 5165 to 3750, reducing flue gas velocity 28%. This eliminates flue gas velocity problems and reduces catalyst carryover to the cyclones. Case B is represented in Figure 4 as point B.

The advantages of complete combustion can be achieved in an FCC unit that is limited by $O_2$ availability due to velocity constraints without increasing regenerator temperature (as would happen with $O_2$ enrichment of air) by independently controlling $O_2$ and the preferred diluent gas $CO_2$.

## TABLE 3

### Comparison of Air and $CO_2$ Regeneration in Example 1

| CASE | A | B |
|---|---|---|
| Flue Gas Composition | | |
| $CO/CO_2$ Ratio, v/v | 0 | 0 |
| $O_2$, v% | 0.5 | 0.5 |
| Coke Yield, wt% feed | 5.6 | 5.6 |
| Combustion Gas | Air[1] | $O_2/CO_2$[2] |
| SCF/Bbl Fd | 2950 | 2115 |
| $O_2$, v% | 21 | 30 |
| lb $N_2$/Bbl Fd | 170 | -- |
| lb $CO_2$/Bbl Fd | -- | 170 |
| lb $O_2$/Bbl Fd | 55 | 55 |
| lb $O_2$ Consumed/Bbl Fd | 53.6 | 53.6 |
| Flue Gas Rate, ACF/Bbl | 5165 | 3750 |
| Regenerator Flue Gas Velocity, (Relative to Case A) | 1.0 | 0.7 |
| Coke on Regenerated Catalyst, % CRC | .25 | .25 |

[1] Air case based on commercial operation.
[2] $O_2/CO_2$ based on heat balance calculations shown in graphical form in Figure 4.

## EXAMPLE 2
### Increased Coke Burning Capacity

As shown in Example 1, substitution of independently controlled $O_2$ and $CO_2$ streams for air in the FCC regenerator significantly reduces gas velocities and increases $O_2$ concentration without increasing regenerator temperature. Therefore, coke burning capacity can be increased up to the gas velocity constraints by increasing $CO_2$ rate and $O_2$ rate, independently, thus reducing $O_2$ concentration without changing regenerator temperature. This is illustrated in present Example 2 illustrated in Table 4.

Case B at 5.6 wt% coke yield is from Example 1. In Case C, the $CO_2$ rate is increased to achieve the flue gas velocities of the base air Case A in Example 1. At an $O_2$ concentration of 24 volume %, the heat balanced coke yield is increased from 5.6 to 6.2 wt% at the same reactor and regenerator conditions as in Case A. Case D shows the maximum heat balanced coke yield of 6.7 wt% when the $O_2$ concentration can be reduced to the preferred minimum of 21 volume percent without reaching a velocity constraint. All cases would be at complete carbon combustion of $CO_2$ and the CRC would not be changed.

The range of coke burning capacity in Example 2 is represented in Figure 4 by points B, C, and D on the $CO/CO_2 = 0$ line. Air operation at constant conditions is represented by the single point in Case A, since $O_2/N_2$ ratio of air is constant. When air regeneration is constrained, regenerating with independently controlled $O_2$ rich and $CO_2$ rich gas streams can result in a 10% increase in coke burning capacity at constant conditions shown in Table I.

## TABLE 4

### Effect of Increase in $CO_2$ on Regeneration in Example 2

| CASE | B | C | D |
|---|---|---|---|
| **Flue Gas Composition** | | | |
| $CO/CO_2$ mole/mole | 0 | 0 | 0 |
| $O_2$, v% | 0.5 | 0.5 | 0.5 |
| Coke Yield, wt% Feed | 5.6 | 6.2 | 6.7 |
| Combustion Gas | $O_2/CO_2$ | $O_2/CO_2$ | $O_2/CO_2$ |
| SCF/Bbl Fd | 2115 | 2950 | 3655 |
| $O_2$, v% | 30 | 24 | 21 |
| lb $CO_2$/Bbl Fd | 170 | 260 | 335 |
| lb $O_2$/Bbl Fd | 55 | 60 | 65 |
| Flue Gas Rate, ACF/Bbl Fd | 3,750 | 5,200 | 6,420 |
| Regenerator Gas Velocity, Relative to Case A | 0.7 | 1.0 | 1.2 |
| Coke on Regenerated Catalyst | .25 | .25 | .25 |
| Control Relationship | | | |
| lb $O_2$/lb Coke | 3.0 | 3.0 | 3.0 |
| $\Delta$lb $CO_2$/lb $O_2$ | 15 | 15 | 15 |
| $k_1$, lb $CO_2$/lb Coke | 45 | 45 | 45 |

When using carbon dioxide as the diluent gas in a regeneration gas mixture with oxygen, the temperature of the regenerator and, therefore, the catalyst will be controlled via two mechanisms. First, the higher molar heat capacity of carbon dioxide relative to nitrogen, which is the diluent gas in air fed regenerators and oxygen enriched air fed regenerators, will result in a 55% increase in the sensible heat removed from the regenerator per mole of flue gases emanating from the regenerator. Second, partial combustion of carbon to CO instead of $CO_2$ reduces heat generation by ~60% for each mole of CO generated. In current practice, a high $CO/CO_2$ ratio in the flue gas is not achievable at complete catalyst regeneration with air because CO combusts to $CO_2$ in a homogeneous gas phase reaction at the conditions required to achieve complete carbon burn.

## Supporting Data For The Present Invention

In accordance with the present invention, an FCC pilot plant with a riser reactor, catalyst regenerator, and continuous catalyst circulation was run in a normal manner except that the fluidization gas used to regenerate the catalyst was altered between air and varying mixtures of $O_2/CO_2$. A series of runs were made to compare $O_2/CO_2$ regeneration to typical air regeneration. The feed and catalyst used are defined in Table 5.

## TABLE 5

### Pilot Plant Feed and Catalyst

| Midcontinent Heavy Gas Oil Feedstock Properties | | Commercial Equilibrium Catalyst Properties | |
|---|---|---|---|
| Gravity, °API | 23.9 | Chemical: | |
| Sp. Gravity, @ 60°F | 0.9105 | $Al_2O_3$: W% | 33.0 |
| Aniline Pt., °F | 198 | Fe: W% | 0.35 |
| | | Ni: ppm | 156 |
| ASTM Distn. D-1160 | °F | V: ppm | 368 |
| IBP | 394 | | |
| 5 | 658 | Physical: | |
| 10 | 702 | Particle Size (3 @ 1000) | |
| 20 | 754 | 0 - 20μ | 0 |
| 30 | 793 | 0 - 40μ | 1 |
| 40 | 821 | 0 - 80μ | 60 |
| 50 | 845 | 0 - 105μ | 91 |
| 60 | 869 | 0 - 149μ | 99 |
| 70 | 894 | APS    μ | 74 |
| 80 | 930 | | |
| 90 | 974 | ABD: gm/cc | 0.84 |
| 95 | 1003 | SA:  $m^2$/gm | 71 |
| 98 | 1025 | $H_2O$ PV: cc/gm | 0.20 |
| K-Factor | 11.91 | Micro-activity: V% Conv. | 71.0 |
| Nitrogen, W% | 0.078 | CO Promotion Number (Relative range 0-55) | 8 |
| Sulfur, W% | 0.59 | | |
| Conradson Carbon, % | 0.23 | | |
| Metals: ppm | | | |
| Ni | 0.3 | | |
| V | 0.8 | | |
| Fe | 2 | | |
| Cu | 0.3 | | |

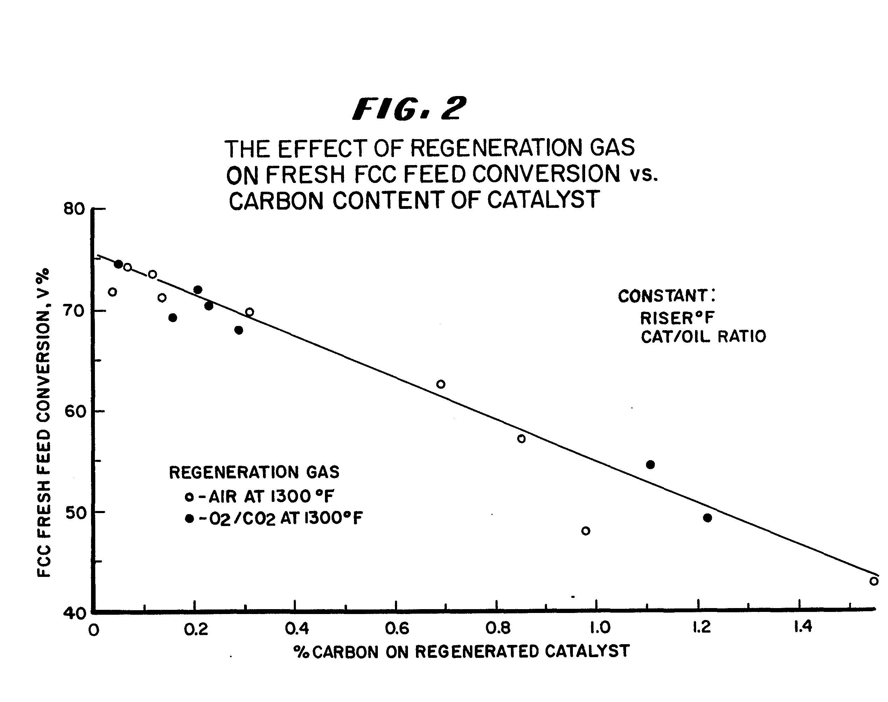

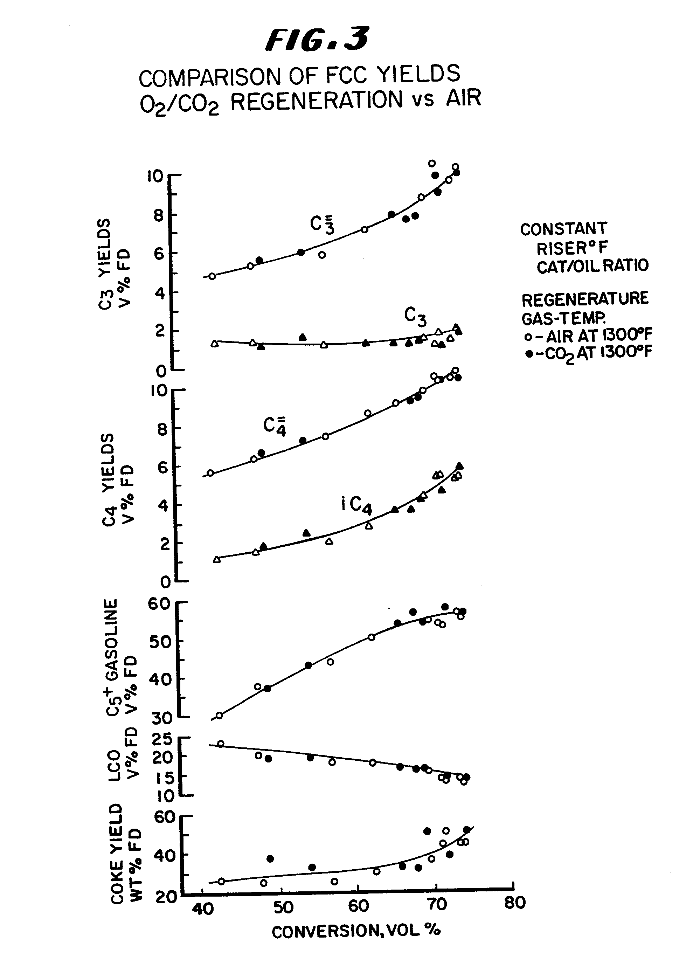

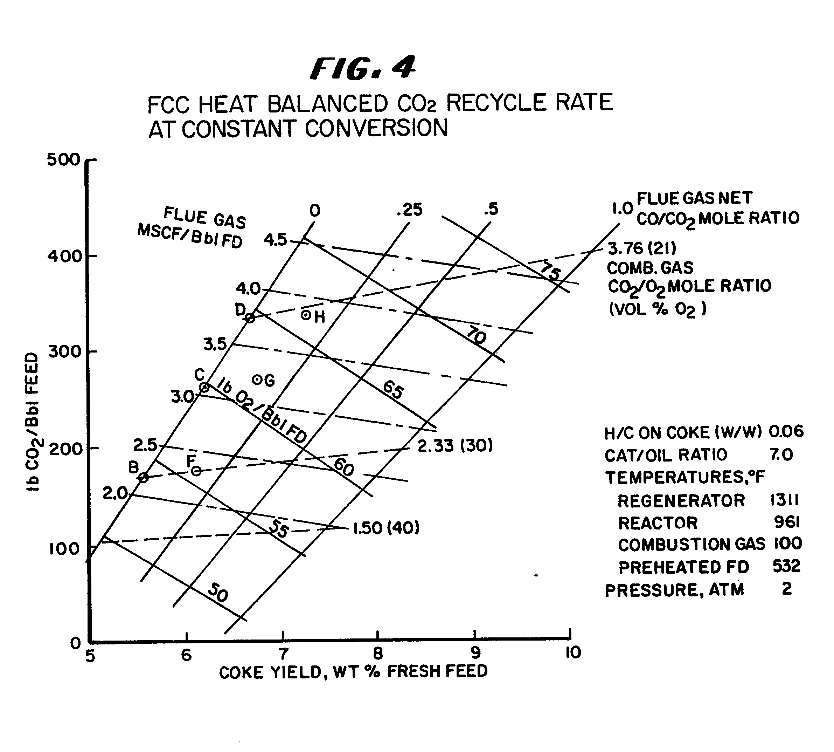

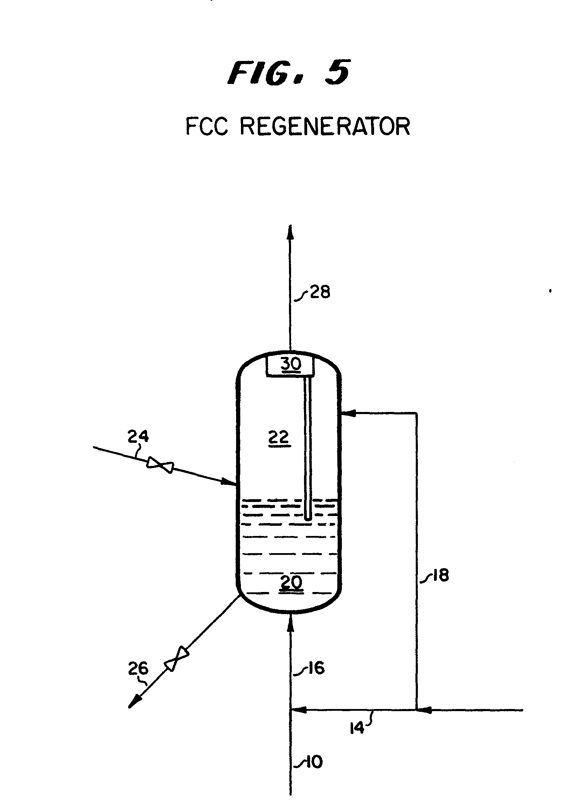

At constant reactor temperature, catalyst to oil ratio, and regenerator temperature, the catalyst regeneration level (CRC) was changed by varying the oxygen supply. A comparison of the data between $O_2/CO_2$ mixtures and air showed that the relationship between conversion and CRC was the same (Figure 2). Further, the product distribution as a function of conversion was unchanged (Figure 3). This demonstrated that FCC catalyst can be regenerated in varying $O_2/CO_2$ mixtures without loss of activity or selectivity relative to air.

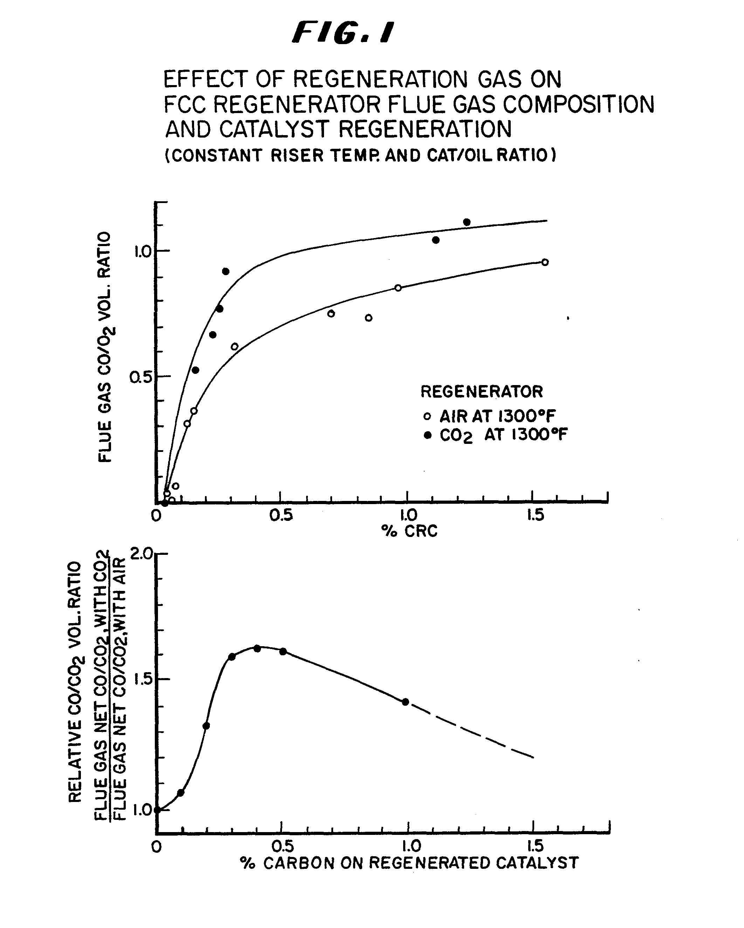

However there was a significant effect on net flue gas composition between the runs with $O_2/CO_2$ and those with air. Since the CRC level was changed by varying $O_2$ supply, the extent of carbon combustion to CO and $CO_2$ also changed. The flue gas $CO/O_2$ volume ratio varied with CRC as shown in Figure 1. The difference in the $CO/O_2$ ratio between $O_2/CO_2$ mixtures and air is significant in that it relates to the "afterburning" problem in commercial FCC operation. Complete catalyst regeneration with air and significant partial combustion have not been simultaneously achievable due to afterburning. As can be seen in Figure 1, there is a breakpoint at which CRC level increases rapidly with little change in net $CO/O_2$ ratio. This breakpoint occurs at a significantly higher net $CO/O_2$ ratio with $O_2/CO_2$ than with air.

It is taught in the prior art that $CO_2$ can react endothermically with carbon in the following manner:

(1)  $C + CO_2 \rightleftharpoons 2CO$        $\Delta H = +41.2$ kcal/mole C

If this reaction is coupled with the exothermic combustion reactions:

(2)  $C + 1/2\ O_2 \longrightarrow CO$        $\Delta H = -26.5$ kcal/mole C

(3)  $C + O_2 \longrightarrow CO_2$        $\Delta H = -94.2$ kcal/mole C

(4)  $CO + 1/2\ O_2 \longrightarrow CO_2$        $\Delta H = -67.7$ kcal/mole CO

The net heat released per pound of carbon reacted will be significantly reduced.  The equilibrium $CO/CO_2$ ratio and heat release for reactions 1-4 above are:

| | | | |
|---|---|---|---|
| TEMP, °F | | 1200 | 1400 |
| PRESS, PSIG | | 10 | 10 |
| COMBUSTION GAS COMP | | | |
| $O_2$, vol.% | | 21 | 21 |
| $CO_2$, vol.% | | 79 | 79 |
| EQUILIBRIUM $CO/CO_2$ PRODUCT | | 0.5 | 2.8 |
| HEAT OF REACTION, MMBTU/Mole C | | -3.1 | +2.3 |
| | | EXOTHERMIC | ENDOTHERMIC |

If the rate of equation (1) is fast enough to reach equilibrium, it should have a significant effect on the reaction products and heat release at 1400°F, but very little effect at 1200°F.  To determine if reaction (1) plays any role in the observed differences between air and $O_2/CO_2$ regeneration, two experiments were carried out.  The continuous FCC pilot plant described was operated using pure $CO_2$ regeneration gas and equilibrium catalyst at constant regenerator temperature.  The catalyst was "clean burned" to a very low CRC level, at which time all oxygen was removed from the combustion gas and replaced by an equal volume of $CO_2$.  The flue gas composition was monitored for CO and the amount of carbon and $CO_2$ reacted was calculated from a mass and elemental oxygen material balance.  A second run was carried out at the same nominal conditions using equilibrium catalyst impregnated with 1 wt% magnesium and calcium, both known catalyzers of reaction (1).  The process conditions and results are shown in Table 5A.

In Run 836 at 1395°F, the rate of reaction (1) was negligible with standard equilibrium FCC catalyst described in Table 5.  In run 846 at 1425°F with calcium and magnesium added to the catalyst, some CO was produced in the absence of oxygen.  Since very little carbon was combusted, the regenerated catalyst coke content (CRC) rose during the run.  This non-steady state operation accounts for the differences between the products seen and what would be predicted by equation (1) stoichiometry. However the rate of reaction (1) was still insignificant.

It is therefore concluded that reaction (1) plays no significant role in the regeneration of FCC catalyst below 1400°F. This conclusion is supported by data presented in European Patent Application 0072653 as previously cited where significant rates of reaction (1) required special catalysts and temperatures of 1400-1600°F.

TABLE 5A
EVALUATION OF THE GASIFICATION
OF CARBON WITH $CO_2$ IN THE FCC REGENERATOR

$$(1) \quad C + CO_2 \rightleftharpoons 2CO$$

| | 836 | 846 |
|---|---|---|
| RUN | 836 | 846 |
| CATALYST | EQUIL | EQUIL + 1% Mg+Ca |
| REGENERATED CATALYST TEMP,°F | 1395 | 1425 |
| FLUE GAS COMPOSITION, VOL% | | |
|    NET CO | 0 | 1.53 |
|    NET $CO_2$ | 0 | -1.30 |
|    TOTAL $CO_2$ | 87 | 84.3 |
| COMBUSTION PRODUCTS | | |
|    CARBON COMBUSTED, gr/hr | 0 | 0.80 |
|    HYDROGEN COMBUSTED, gr/hr | 0 | 0.06 |
|    NET CO, moles/100 moles C | 0 | +576 |
|    NET $CO_2$, moles/100 moles C | 0 | -490 |
| OXYGEN BALANCE CLOSURE, % | 100.2 | 100.1 |
| MASS BALANCE CLOSURE, % | 100.4 | 101.0 |
| $CO_2$ CONSUMED/C CONSUMED | 0 | 4.9[1] |
| CO PRODUCED/$CO_2$ CONSUMED | 0 | 1.2[1] |
| CO/$CO_2$ RATIO IN FLUE GAS | 0 | 0.02[2] |

NOTES:

1   EQN (1) STOICHIOMETRIC RATIO $CO_2$/C=1 AND CO/$CO_2$=2. UNSTEADY STATE OPERATION ACCOUNTS FOR STOICHIOMETRIC DIFFERENCES.

2   EQN (1) EQUILIBRIUM RATIO CO/$CO_2$ ~3 AT 1400°F, 10 PSIG.

The flue gas composition differences observed between air and $O_2/CO_2$ regeneration of FCC catalyst are attributed to the high $CO_2$ concentration in the net flue gas relative to air (Table 6). Carbon dioxide is a free radical scavenger, and the homogeneous reaction of CO to $CO_2$ is known to proceed via a free radical mechanism, which may account for this effect.

TABLE 6 .

Comparison of Flue Gas Composition

| Regeneration Gas<br>Flue Gas, V% | Air | $O_2/CO_2$ |
|---|---|---|
| $N_2$ | 79 | — |
| $O_2$ | 1 | 1 |
| $CO_2$ | 11 | 90 |
| CO | 0 | 0 |
| $H_2O$ | 9 | 9 |

The experimental data indicate that $CO_2$ retards the "afterburning" of CO to $CO_2$. Further, at a given $CO/O_2$ ratio in the flue gas, catalyst regenerated with $O_2/CO_2$ will have a lower CRC. This will result in higher conversion and increased $C_5$+ gasoline and coke yield.

The relative net $CO/CO_2$ ratio shown in Figure 1 shows a marked increase in net $CO/CO_2$ with $O_2/CO_2$ mixtures at CRC levels of 0.1-0.3. This indicates that more complete catalyst regeneration can be achieved in the partial combustion mode when regenerating FCC catalyst with $O_2/CO_2$ blends.

This in turn reduces the temperature and oxygen demand of the regenerator, and therefore, the velocity of the regeneration gas is reduced.

EXAMPLE 3

Increased Coke Burning Capacity at
Partial Combustion and Constant CRC

Increased coke burning capacity at complete combustion with independently controlled $O_2/CO_2$ blends was illustrated in Example 2. Partial combustion further increases coke burning capacity by reducing the heat generated from the combustion of carbon and the oxygen required for combustion. This results in a lower $CO_2$ rate required to control regenerated catalyst temperature, and therefore lower flue gas velocity. In typical air regenerators, significant CO generation can not be obtained at complete catalyst regeneration because the CO "afterburns" to $CO_2$. The pilot plant operation demonstrated that $CO_2$ inhibits "afterburning" as shown in Figure 1. The inhibition of CO combustion to $CO_2$ resulted in a 60% increase in CO generation at constant CRC. This is illustrated in present Example 3. Case E in Table 7 is an example of a commercial FCC air partial combustion operation. Based on data in Figure 1, the net $CO/CO_2$ ratio can be increased from .14 to .20 at the same CRC level with $O_2/CO_2$ blend gas. Case F illustrates this at the maximum preferred $O_2$ concentration of 30%. The $CO_2$ rate.can be increased further, diluting the $O_2$ to 24% resulting in an increase in heat balanced coke yield from 6.0 to 6.8 wt% at the same regenerator temperature, catalyst CRC, and gas velocity as Case E. This is shown in Case G. In Case H, the $CO_2$ rate is increased to the minimum preferred $O_2$ concentration of 21%, representing the maximum coke burning capacity at a net $CO/CO_2$ ratio of 0.20. It is anticipated that significantly higher net $CO/CO_2$ ratios can be achieved at acceptable CRC levels due to the inhibiting effect of $CO_2$ on "afterburning".

Again, the increased coke burning capacity is achieved at constant reactor conditions. This represents a significant increase in residuum feed capacity when an FCC unit is operated to regenerate catalyst with independently controlled $O_2/CO_2$ blends while maintaining optimum reaction conditions. Cases F, G, and H are represented by points F, G and H in Figure 4.

### TABLE 7
### Runs in Support of Example 3

| CASE | E | F | G | H |
|------|------|------|------|------|
| Combustion Gas | Air | $O_2/CO_2$ | $O_2/CO_2$ | $O_2/CO_2$ |
| Coke Yield, wt% Fd | 6.0 | 6.15 | 6.80 | 7.30 |
| Flue Gas Composition | | | | |
| $CO/CO_2$ Ratio, Mole/Mole[1] | 0.14 | 0.20 | 0.20 | 0.20 |
| $O_2$, Mole % | ~0 | ~0 | ~0 | ~0 |
| Combustion Gas | | | | |
| SCF/Bbl Fd | 3095 | 2200 | 3030 | 3665 |
| $O_2$, v% | 21 | 30 | 24 | 21 |
| lb $N_2$/Bbl Fd | 181 | -- | -- | -- |
| lb $CO_2$/Bbl Fd | -- | 179 | 268 | 336 |
| lb $O_2$/Bbl Fd | 55 | 55 | 61 | 65 |
| Flue Gas Rate, ACF/Bbl | 5,520 | 4,000 | 5,450 | 6,560 |
| Regenerator Gas Velocity, Relative to Case E | 1.0 | 0.7 | 1.0 | 1.2 |
| CRC | 0.25 | 0.25 | 0.25 | 0.25 |
| Control Relationship | | | | |
| $\Delta$lb $O_2$/lb Coke | 2.82 | 2.76 | 2.76 | 2.76 |
| $\Delta$lb $CO_2$/lb $O_2$ | -- | 15 | 15 | 15 |
| $k_1$-$\Delta$lb $CO_2$/lb Coke | -- | 40 | 40 | 40 |

(1) From Figure 1 Relative Net $CO/CO_2$ Ratio for $O_2/CO_2$ gas is 1.4 times air.

In the practice of the present invention, regenerator velocities will be controlled in conjunction with the regenerator temperature when controlling the carbon dioxide rate independently from the oxygen rate for fluidizing gas. Based upon the high heat capacity of carbon dioxide relative to nitrogen, regenerator velocity can be reduced by up to 30% while keeping regenerator temperature, reactor temperature, and catalyst to oil ratio constant. Alternately, $CO_2$ rate can be adjusted to achieve the desired catalyst to oil ratio within temperature and velocity limits. Compared to nitrogen-containing regeneration systems, the present invention allows additional coke burning capacity within the velocity and the temperature constraints of the regenerator, and provides the additional degree of freedom to control catalyst to oil ratio at the desired level. This increases residuum feed capacity at optimum yields.

U.S. Patent 4,388,218 cited previously discloses a two stage regeneration process wherein spent catalyst from the FCC reactor is contacted in a first regeneration zone with varying ratios of $O_2$ and $CO_2$ gas at 900-1200°F, to partially combust the coke with no net evolution of heat via reactions 1 through 4 above.

Based on the experimental results, reaction (1) will be negligible in the temperature range cited and the heat of reaction will be highly exothermic. Therefore any combustion of coke will result in the net evolution of heat and an increase in temperature. The second stage of the regeneration process is operated at typical FCC regenerator temperatures of 1250-1400°F with air as the combustion gas to remove coke from the catalyst before returning it to the reactor. Operation of the two stage process as taught in the patent will be limited to coke yields typical of commercial FCC operation without significant net heat evolution. All of the attendant limitations on air regeneration cited herein will then apply to the 2-stage process described.

European Patent Application 0072653 recognizes this, and teaches a two stage regeneration process wherein the first stage is operated at 1400-1600°F with a metal catalyst added to specifically catalyze reaction (1).

The teaching in the present invention differs from the above prior art in that regeneration of spent FCC catalyst is not dependent on reaction (1), and that the independent control of $O_2$ and $CO_2$ to a single regeneration reaction zone operating between 1250-1600°F can result in a significantly broader range of heat balanced operation of the FCC process without major net evolution of heat (via steam coils, catalyst coolers, or other devices) as demonstrated by examples 1-3 above.

## EXAMPLE 4

### $CO_2$ QUENCH OF FLUE GAS

A further embodiment of the invention is the addition of quench gas, preferably from the same source as the $CO_2$ rich fluidization gas at 100-200°F, to the regenerator dilute phase preferably when operating in the partial combustion mode, although such a quench can be used when operating in complete combustion. This embodiment is explained in current Example 4 and illustrated in Table 8.

Case I in Table 8 represents typical FCC air regeneration conditions operating in partial combustion. By substituting $CO_2$ for $N_2$, the amount of CO afterburned is reduced as illustrated in Example 3. At a CRC of 0.25, the calculated net $CO/CO_2$ mole ratio in the flue gas increases (.083 to .116), and results in a lower regenerator dilute phase temperature (1348°F to 1318°F) as shown in Case J. However, some CO afterburning is still occuring since the temperature difference between the dilute and dense phases is still 41°F in Case J.

By quenching the dilute phase flue gas to 1100°F, CO afterburning can be totally eliminated. As shown in Case K, this results in a calculated net $CO/CO_2$ mole ratio of 0.164 and flue gas dilute phase temperature of 1100°F.

With the degree of freedom to quench the regenerator dilute phase flue gases to eliminate afterburning, complete catalyst regeneration can be achieved at a significant level of partial combustion. The rate of CO quench when operating in the partial combustion mode will typically be 15 to 35 wt% of the total fluidization gas rate represented by line 16 in figure 5, and preferably between 20 to 30 wt% of the fluidization gas to maximize coke burning capacity while maintaining the flue gas temperature entering the regenerator catalyst separation cyclones at 1000-1400°F and preferably 1050-1150°F.

TABLE 8
COMPARISON OF AIR AND $CO_2$ REGENERATION WITH
CO₂ QUENCH TO FCC REGENERATOR DILUTE PHASE

| CASE | AIR BASE CASE[1] I | $CO_2$ RECYCLE CASE J | CO₂ QUENCH WITH CO₂ RECYCLE CASE K | CO₂ QUENCH ADDED TO CASE G CASE L |
|---|---|---|---|---|
| FLUE GAS COMP. | | | | |
| NET $CO/CO_2$, m/m | 0.083 | 0.116 | 0.164 | 0.20 |
| $O_2$, v% | 0 | 0 | 0 | 0 |
| COKE YIELD, WT% | 5.37 | 5.37 | 5.65 | 6.80 |
| lb/Bbl Fd | 17.4 | 17.4 | 18.3 | 22.0 |
| COMBUSTION GAS | | | | |
| $O_2$ v% | 21 | 30 | 30 | 24 |
| lb $O_2$/Bbl Fd | 50 | 49.4 | 49.2 | 61 |
| lb $N_2$/Bbl Fd | 166.5 | -- | -- | -- |
| lb $CO_2$/Bbl Fd | -- | 158.3 | 158.3 | 268 |
| QUENCH GAS TO DILUTE PHASE | | | | |
| lb $CO_2$/Bb Fd | -- | -- | 40.6 | 80.5 |
| FLUE GAS RATE, SCF/Bbl | 2960 | 2069 | 2420 | 3895 |
| ACF/Bbl | 5150 | 3540 | 3630 | 5840 |
| REGENERATOR GAS VELOCITY RELATIVE TO BASE CASE I | 1 | 0.69 | 0.70 | 1.0[3] |
| CAT/OIL lb/Bbl Fd | 2430 | 2430 | 2430 | 2275 |
| TEMPERATURES, °F | | | | |
| REGENERATOR DILUTE | 1348 | 1318 | 1100 | 1100 |
| DENSE | 1277 | 1277 | 1277 | 1311 |
| REACTOR | 960 | 960 | 960 | 960 |
| COMBUS. GAS | 290 | 290 | 290 | 290 |
| PRESSURE, ATM. | 2 | 2 | 2 | 2 |

NOTES:
1. Typical commercial operation.
2. Assumes quench eliminated CO afterburn equivalent to the heat required to raise dense phase temperature to dilute phase temperature in Case J.
3. Relative to Case E.

A typical application of this invention follows, using figure 5 as a reference. When feeding a relatively low coke yielding feedstock to the FCC (represented by Case B) commercially pure gaseous oxygen (10) is combined with $CO_2$ rich inert gas (14) to form the regenerator fluidization combustion gas blend (16). This gas is injected into the dense catalyst zone of the regenerator (20) where coke on the catalyst from the reactor (24) is combusted in the presence of the oxygen containing fluidization gas (16) to CO, $CO_2$ an $H_2O$.

The regenerated catalyst (26) coke level (CRC) is controlled by the oxygen (16) rate, and the regenerated catalyst (26) temperature by the independently controlled $CO_2$ rate (14). Case B is operated in the complete combustion mode by adding a catalyst promoter such that there is no CO afterburning and therefore $CO_2$ quench (18) to the dilute flue gas zone of the regenerator (22) is not needed. Catalyst particles are separated from the flue gas in the cyclones (30) and returned to the catalyst bed (20). The flue gas leaves the regenerator in line 28.

Now it is desired to feed a higher coke yielding feedstock to the regenerator. First the complete combustion catalyst promoter is removed, resulting in partial combustion operation as represented by case J. The reduction in heat generation due to the incomplete CO combustion, reduces the regenerator catalyst temperature (20) resulting in an increase in catalyst circulation rate to maintain FCC reactor temperature. The dilute phase temperature remains high due to CO afterburning in the dilute phase flue gas (22). Since afterburning will limit coke burning capacity by increasing temperature and flue gas velocity, $CO_2$ quench (18) is injected independently of stream (14) into the dilute phase (22) to reduce the flue gas temperature to 1100°F as shown in Case K.

Now, when the high coke yielding feed is processed, the increased coke is combusted by increasing oxygen (10) to the regenerator catalyst zone (20). The $CO_2$ rate (14) is increased to control the regenerated catalyst temperature in zone 20 and the $CO_2$ quench rate (18) is increased to control the flue gas temperature to the cyclones (30) at 1100°F.

The result is Case L, with the flue gas velocity equivalent to the velocity of the air regeneration Case E.

Changes in $CO_2$ fluidization flow rate required to offset changes in inherent feed coking tendency, while maintaining desired process conditions are defined by the relationship:

$$Y = K_1(C-C_0)+Y_0$$

Wherein:

$Y$ = New $CO_2$ rate, lb $CO_2$/Bbl Fd

$Y_0$ = Initial $CO_2$ rate, lb $CO_2$/Bbl Fd

$C_0$ = Initial feed coke yield, lb coke/Bbl Fd

$C$ = New feed coke yield lb coke/Bbl Fd

$k_1$ = 40-50 (Complete Combustion $CO/CO_2 = 0$) lb $CO_2$/lb coke
30-50 (Partial Combustion, $CO/CO_2 > 0$) lb $CO_2$/lb coke

Determination of the feed coking tendency can be done by a procedure, such as the standard Micro-Activity Test (MAT). Since in this invention the $CO_2$ rate is set to control regenerator catalyst temperature, the catalyst to oil ratio can be held constant, and the incremental coke yield from the MAT test will be representative of the incremental coke yield in the FCC unit when switching to the new feed. Alternately, a relationship between coke yield and feed Concarbon residue can be used.

The constant $k_1$ is a function of many things, but the primary effects are the amount of $O_2$ required to combust the coke and the regenerator catalyst temperature. The constant $k_1$ is calculated for each case in Examples 2 and 3.

The operating range defined by this relationship is illustrated in Figure 4. By varying the $CO_2$ rate, constant reaction conditions can be maintained as coke yield is increased, whether in complete or partial combustion. A portion of the operating zone defined by this relationship is represented by the area enclosed by points BCGF for the examples given. The operating zone for air at the same constant conditions is equivalent to the line BF. Increased coke yields can be achieved in air, but the regenerator temperature will rise and catalyst/oil ratio will decrease resulting in decreased conversion. Regenerator temperature and gas velocity will also limit the air coke burning capacity. In Examples 1 and 3 (Case A, G), coke burning capacity is increased 20% at constant regenerator temperature and flue gas velocity when controlling the $CO_2$ rate independently of the oxygen rate.

Higher levels of CO generation than shown in Example 3 are anticipated and are included by this invention.

Although the present invention has been set forth with regard to a specific preferred embodiment, it is deemed that other variations from the invention can be contemplated by those skilled in the art. Therefore, the scope of the invention should not be limited by this particular embodiment, but rather should be ascertained from the claims which follow.

## CLAIMS

1. In a process for operating a single stage regenerator of a fluidized catalytic cracking process wherein the regenerator is operated at 1250°F-1600°F with a gas mixture of an oxygen-containing gas and a carbon dioxide containing gas, the improvement comprising

(a) independently controlling the input of oxygen-containing gas to the regenerator to achieve a carbon on regenerated catalyst (CRC) level of less than 0.5 wt%, such that oxygen in the flue gas does not exceed 3 vol.%, and

(b) independently controlling the input of carbon dioxide-containing fluidization gas to the regenerator to achieve a regenerator catalyst temperature that results in heat balancing the fluidized catalytic cracking unit at the desired catalyst to oil ratio;

such as not to exceed: the maximum temperature of the regenerator, the velocity constraints of the regenerator, or an oxygen range of 10-40% by volume in the fluidizing gas mixture.

2. The process of Claim 1 wherein the carbon dioxide-containing fluidization gas rate is controlled with respect to changes in feed coke yield according to the relationship:

$$Y = K_1(C-C_0)+Y_0$$

Wherein: $Y =$ the new $CO_2$ flow in lb $CO_2$/Bbl Fd

$Y_0 =$ the initial $CO_2$ flow in lb $CO_2$/Bbl Fd

$C_0 =$ initial feed coke yield, lb coke/Bbl fd

$C =$ new feed coke yield, lb coke/Bbl Fd

$k_1 = $ 40-50 at complete combustion ($CO/CO_2 = 0$), lb coke/Bbl fd 30-50 at less than complete combustion ($CO/CO_2>0$), lb coke/Bbl fd

3. The process of Claim 1 wherein the carbon dioxide containing gas is controlled in the range of greater than 60% carbon dioxide by volume in the fluidizing gas mixture.

4. The process of Claim 1 wherein the oxygen containing gas is commercially pure oxygen.

5. The process of Claim 1 wherein the carbon dioxide-containing gas is commercially pure carbon dioxide.

6. The process of Claim 1 wherein the carbon dioxide-containing gas is a recycle stream from the flue gas of the regenerator.

7. The process of Claim 1 wherein the oxygen content of the fluidizing gas mixture is in the range of 21-30 vol.%.

8. The process of Claim 1 wherein the regenerator is operated to achieve a carbon on regenerated catalyst (CRC) of 0.25 or less.

9. The process of Claim 1 wherein the regenerator is operated to achieve a catalyst temperature in the range of 1250-1400°F.

10. The process of Claim 1 wherein a $CO_2$ quench stream is introduced into the dilute phase of the fluidized regenerator to reduce the conversion of CO to $CO_2$.

11. The process of Claim 10 wherein the $CO_2$ quench gas rate to the regenerator dilute phase is controlled to maintain a flue gas temperature entering the catalyst separation cyclones between 1000-1400°F.

12. The process in Claim 10 wherein the $CO_2$ quench gas rate to the regenerator dilute phase is controlled to maintain a flue gas temperature entering the catalyst separation cyclones between 1050-1150°F.

13. The process in Claim 10 wherein the $CO_2$ quench gas rate to the regenerator is 15-35 wt% of the fluidization.

14. The process in Claim 10 wherein the $CO_2$ quench gas rate to the regenerator is 20-30 wt% of the fluidization gas.

1 / 5

0152845

# FIG. 1

EFFECT OF REGENERATION GAS ON
FCC REGENERATOR FLUE GAS COMPOSITION
AND CATALYST REGENERATION
(CONSTANT RISER TEMP. AND CAT/OIL RATIO)

# FIG. 2

## THE EFFECT OF REGENERATION GAS
## ON FRESH FCC FEED CONVERSION vs.
## CARBON CONTENT OF CATALYST

CONSTANT:
RISER °F
CAT/OIL RATIO

REGENERATION GAS
o - AIR AT 1300 °F
● - O2/CO2 AT 1300°F

FCC FRESH FEED CONVERSION, V %

% CARBON ON REGENERATED CATALYST

3 / 5

0152845

# *FIG.3*

### COMPARISON OF FCC YIELDS
### $O_2/CO_2$ REGENERATION vs AIR

CONSTANT
RISER°F
CAT/OIL RATIO

REGENERATURE
GAS-TEMP.
o – AIR AT 1300°F
● – $CO_2$ AT 1300°F

CONVERSION, VOL %

# FIG. 4

## FCC HEAT BALANCED $CO_2$ RECYCLE RATE AT CONSTANT CONVERSION

H/C ON COKE (W/W) 0.06
CAT/OIL RATIO 7.0
TEMPERATURES, °F
  REGENERATOR 1311
  REACTOR 961
  COMBUSTION GAS 100
  PREHEATED FD 532
PRESSURE, ATM 2

# FIG. 5

## FCC REGENERATOR

## DOCUMENTS CONSIDERED TO BE RELEVANT

EP 85101084.3

| Category | Citation of document with indication. where appropriate, of relevant passages | Relevant to claim | CLASSIFICATION OF THE APPLICATION (Int. Cl.4) |
|---|---|---|---|
| A | EP - A1 - 0 092 065 (ASHLAND OIL, INC.)<br><br>* Claims; page 5, line 15 - page 11, line 29 *<br><br>-- | 1,7 | C 10 G 11/14<br>B 01 J 23/90<br>B 01 J 29/38 |
| A | EP - A1 - 0 092 059 (ASHLAND OIL, INC.)<br><br>* Claims; page 5, line 15 - page 12, line 24 *<br><br>-- | 1,6,9 | |
| A | US - A - 4 354 925 (SCHORFHEIDE)<br><br>* Claims; column 3, line 2 - column 4, line 24 *<br><br>-- | 1,3-6 | |
| A | GB - A - 2 001 545 (IMPERIAL CHEMICAL INDUSTRIES LIMITED)<br><br>* Claims; page 1, line 98 - page 3, line 60 *<br><br>---- | 1,3-6,9 | **TECHNICAL FIELDS SEARCHED (Int. Cl.4)**<br><br>C 10 G 11/00<br>B 01 J 23/00<br>B 01 J 29/00 |

The present search report has been drawn up for all claims

| Place of search | Date of completion of the search | Examiner |
|---|---|---|
| VIENNA | 15-05-1985 | STÖCKLMAYER |